# EUROPÄISCHE PATENTSCHRIFT

(11) **EP 3 209 896 B1**
(45) Veröffentlichungstag und Bekanntmachung des Hinweises auf die Patenterteilung: **04.09.2019**
(21) Anmeldenummer: 15784394.7
(22) Anmeldetag: 23.10.2015
(51) Int. Cl.: F16D 1/08, F16D 1/10

(54) **DREHMOMENTÜBERTRAGUNGSANORDNUNG**
TORQUE TRANSMISSION ARRANGEMENT
DISPOSITIF DE TRANSMISSION DE COUPLE

(30) Priorität: 23.10.2014 DE 102014015717
(43) Veröffentlichungstag der Anmeldung: 30.08.2017
(73) Patentinhaber: Audi AG, 85045 Ingolstadt (DE)
(72) Erfinder: BUCK, Michael, 85051 Ingolstadt (DE); KLEEMANN, Oliver, 85049 Ingolstadt (DE)
(74) Vertreter: Lehle, Josef
(86) Internationale Anmeldenummer: PCT/EP2015/074614
(87) Internationale Veröffentlichungsnummer: WO 2016/062864

(56) Entgegenhaltungen:
- DE-A1-102010 035 451
- US-A1- 2003 073 502

## Beschreibung

Die vorliegende Erfindung betrifft eine Drehmomentübertragungsanordnung nach dem Oberbegriff des Patentanspruchs 1.

Eine solche Drehmomentübertragungsanordnung ist zum Beispiel in einem Fahrzeug-Antriebsstrang durch eine Getriebe-Eingangswelle und einer Nabe eines Triebflansches eines Zweimassenschwungrads gebildet. Aufgrund von Montagetoleranzen ist ein geringfügiges Einbauspiel zwischen der Welle und der Nabe vorhanden.

Aus der WO 2013/178340 A2 ist eine Drehmomentübertragungsanordnung bekannt, bei der eine radial innere Welle und eine radial äußere Nabe über eine spielbehaftete Steckverzahnung miteinander momentenübertragend verbunden sind. Die Steckverzahnung ist durch eine Wellen-Außenverzahnung und eine damit zusammenwirkende Naben-Innenverzahnung gebildet. Zur Vermeidung akustischer Auffälligkeiten (zum Beispiel ein Verzahnungsklappern), das heißt zur Bereitstellung einer Spielfreiheit in der Steckverzahnung, ist ein Federelement vorgesehen, mit dem die Welle und die Nabe gegeneinander verspannbar sind.

In der obigen WO 2013/178340 A2 erstreckt sich das abgewinkelte Federelement achsparallel durch die Nabe bzw. deren Innenverzahnung und erzeugt eine Vorspannung zwischen Welle und Nabe, die zum Beispiel Klappergeräuschen im drehmomentfreien Antriebsbetrieb (Leerlauf, etc.) entgegenwirkt. Die Vorspannung wirkt in Umfangsrichtung bzw. in Rotationsrichtung, das heißt tangential zur Welle/Nabe. Für die Anordnung und Positionierung des Federelements müssen fertigungstechnisch aufwändig entsprechende Ausnehmungen zumindest in der Innenverzahnung der Welle vorgesehen sein.

Aus der US 2003/0073502 A1 ist eine gattungsgemäße Drehmomentübertragungsanordnung in einem Fahrzeug-Antriebsstrang bekannt, die eine radial innere Welle und eine radial äußere Nabe aufweist, die über eine spielbehaftete Steckverzahnung miteinander momentenübertragend verbunden sind. Zur Herstellung einer Spielfreiheit weist die Nabe einen Abstützabschnitt auf, gegen den ein Federelement mit einer Federkraft abstützbar ist. Aus der DE 10 2010 035 451 A1 ist eine weitere Drehmomentübertragungsanordnung bekannt, die ebenfalls ein Federelement aufweist, mit dem Spielfreiheit zwischen einer Nabe und einer Welle herstellbar ist.

Die Aufgabe der Erfindung besteht darin, eine Drehmomentübertragungsanordnung bereitzustellen, in der konstruktiv einfach, insbesondere ohne Bereitstellung entsprechender Ausnehmungen, ein Federelement einsetzbar und gegebenenfalls für bestehende Antriebsverbindungen nachrüstbar ist.

Die Aufgabe ist durch die Merkmale des Patentanspruchs 1 gelöst. Vorteilhafte und besonders zweckmäßige Ausgestaltungen der Erfindung sind Gegenstand der abhängigen Ansprüche.

Erfindungsgemäß weist die Nabe zur Herstellung der Spielfreiheit einen Abstützabschnitt auf, gegen den das Federelement mit einer Federkraft abgestützt ist, und zwar unter Aufbau eines Kippmoments, mit dem die Nabe nicht mehr in Umfangsrichtung gegen die Welle verspannt wird, sondern vielmehr in der Axialrichtung gegenüber die Welle kippbar ist. Mit der Erfindung ist zudem eine Konstruktion umsetzbar, bei der die Verzahnungen der Steckverzahnung für einen Axialausgleich axial verschiebbar sind.

Im Hinblick auf eine einfache Nachrüstbarkeit des Federelements ist es von Vorteil, wenn der Abstützabschnitt außerhalb der Naben-Innenverzahnung positioniert ist. Der nabenseitige Abstützabschnitt kann dabei in axialer Verlängerung unmittelbar an die Naben-Innenverzahnung anschließen.

In einer technischen Umsetzung kann die Nabe mit ihrer Innenverzahnung auf ein Wellen-Endstück aufgesteckt sein. Das Federelement kann in einem solchen Fall auf einer, von einer Wellen-Stirnseite abgewandten Naben-Stirnseite positioniert sein, das heißt um einen Längen- oder Axialversatz von der Wellen-Stirnseite beabstandet sein.

In konstruktiv einfacher Weise kann der Abstützabschnitt eine der Welle zugewandte, insbesondere glattzylindrische, umlaufende Ringfläche sein. Die nabenseitige Ringfläche kann im Vergleich zur Naben-Innenverzahnung, insbesondere im Vergleich zu deren Fußkreisdurchmesser, durchmessergrößer sein. Der Übergang zwischen der Naben-Innenverzahnung und dem Abstützabschnitt kann durch eine Ringschulter mit im Wesentlichen zur Achsrichtung rechtwinkliger Schulterfläche gebildet sind, die an einer umlaufenden Innenecke in die Ringfläche (das heißt den Abstützabschnitt) übergeht.

Zur Positionierung des Federelements kann zwischen der Welle und dem nabenseitigen Abstützabschnitt ein Ringraum gebildet sein, in dem das Federelement angeordnet ist. Bevorzugt kann der Ringraum radial nach innen durch die Außenverzahnung begrenzt sein, das heißt dass sich die Außenverzahnung in der Axialrichtung betrachtet mit einem Übermaß über die Naben-Innenverzahnung hinaus erstreckt und den Abstützabschnitt in der Axialrichtung überlappt.

Erfindungsgemäß weist das zwischen dem Naben-Stützabschnitt und der Welle abgestützte Federelement einen kreisringförmigen Federring-Grundkörper und zumindest einen davon radial nach innen und/oder nach außen abragenden Vorsprung auf. Der Federring-Grundkörper kann mit seiner Innenseite auf die Welle aufgesteckt sein oder alternativ dazu mit seiner Außenseite auf den Naben-Abstützabschnitt aufgesteckt sein.

Bei auf der Welle aufgestecktem Federring-Grundkörper kann sich ein radial nach außen abragender, federnder Vorsprung am Naben-Abstützabschnitt abstützen. Dadurch kann bei einfacher Gestaltung des Federelements eine durchgehende, gegebenenfalls bereits im Einsatz befindliche Verzahnung verwendet werden. Die Montage der Steckverbindung ist einfach und zuverlässig durchführbar, wobei vorab lediglich der Federring auf die Welle aufzustecken und anschließend die Verbindung mit der Nabe zum Beispiel eines Antriebsteils im Antriebsstrang eines Kraftfahrzeugs herzustellen ist.

Der radial nach außen oder innen abragende Vorsprung im Federring-Grundkörper kann baulich besonders günstig durch eine aus einem bandförmigen Federring herausgestanzte Federzunge gebildet sein, die bevorzugt im Querschnitt V-förmig gebogen mit einem in Montagerichtung radial äußeren (oder inneren) Federschenkel ausgeführt sein kann. Die Federzunge wirkt dabei sowohl reibschlüssig in Umfangsrichtung (im Rahmen gegebenenfalls vorhandenen Umfangsspiels) als auch durch ein einseitiges Kippmoment vermehrt spielausgleichend, wodurch Verzahnungsgeräusche vermieden werden können.

In einer alternativen Ausgestaltung der Erfindung kann der radial abragende Vorsprung durch eine nockenförmige Ausformung des Federrings gebildet sein, die bei einer fertigungstechnisch einfachen Ausbildung ausreichend hohe Vorspannkräfte in der Verbindung sicherstellen kann, insbesondere wenn die nockenförmige Ausformung durch sich überlappende Endbereiche eines offen ausgeführten Federring-Grundkörpers hergestellt ist.

In einer weiteren, vorteilhaften Ausgestaltung der Erfindung kann der, z.B. auf die Wellen-Außenverzahnung aufgesteckte Federring-Grundkörper zumindest eine in eine Nut der Außenverzahnung der Welle eingreifende Fixierung in Umfangsrichtung aufweisen. Dies stellt sicher, dass der Federring (bzw. der Federring-Grundkörper) nicht eine unbeabsichtigte Relativverdrehung gegenüber Welle und Nabe ausführen und/oder eine definierte Montagestellung einnehmen kann; besonders bevorzugt können dazu drei in Umfangsrichtung verteilte Fixierungen vorgesehen sein.

Die Fixierungen können bevorzugt durch spanlos herstellbare, radial nach innen ragende Einformungen im Federring gebildet sein.

Schließlich wird vorgeschlagen, dass im montierten Zustand der Verbindung der Federring in axialer Richtung zwischen einer Ringschulter in der Nabe und einem an die Außenverzahnung der Welle angrenzenden Ringbund der Welle positioniert ist. Der Federring ist demzufolge zuverlässig in axialer Richtung gehalten und kann gegebenenfalls sogar als Anschlagelement bei der Montage der Wellen-Nabe-Verbindung bzw. an der Steckverzahnung wirken.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Es zeigen:
- Fig. 1: eine nur teilweise dargestellte Antriebsvorrichtung in einem Antriebsstrang für Kraftfahrzeuge, mit einer Welle und einem Triebflansch, die mittels einer Steckverzahnung miteinander gekoppelt sind, sowie mit einem ringförmigen Federelement zwischen Welle und Nabe;
- Fig. 2: in einem Längsschnitt die Welle-Nabe-Verbindung gemäß Fig. 1 und benachbart dazu das eingesetzte Federelement mit ausgestanzter Federzunge in raumbildlicher Einzeldarstellung;
- Fig. 3: eine zur Fig. 2 abgewandelte Welle-Nabe-Verbindung mit einer im Querschnitt V-förmig abragenden Federzunge des Federelements;
- Fig. 4: eine zu den Fig. 2 und 3 alternative Welle-Nabe-Verbindung mit einem Federelement mit einem radial nach außen ragenden, nockenförmigen Vorsprung; und
- Fig. 5: abschnittsweise ein zur Fig. 4 abgewandeltes Federelement, dessen Vorsprung durch sich überlappende Endbereiche eines offenen Federrings gebildet ist; und
- Fig. 6: in einer Teilansicht ein weiteres Ausführungsbeispiel des Federelements.

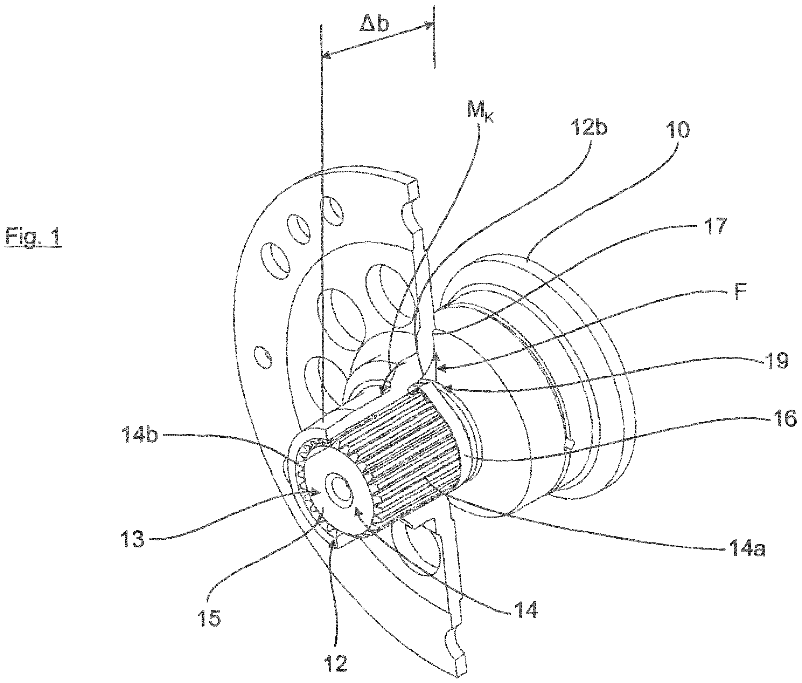

In der Fig. 1 ist teilweise eine Drehmomentübertragungsanordnung zwischen einer Welle 10 und einer Nabe 12 gezeigt, die mittels einer Steckverzahnung 14 miteinander momentenübertragend verbunden sind. Die Welle 10 (zum Beispiel eine Getriebe-Antriebswelle oder Abtriebswelle) trägt dazu eine achsparallele Außenverzahnung 14a, die mit der Innenverzahnung 14b der Nabe 12 in Eingriff ist. Die Nabe 12 kann Bestandteil eines Triebflansches innerhalb eines Zweimassenschwungrads oder Bestandteil einer Kardanwelle im Antriebsstrang von Kraftfahrzeugen sein.

Die dargestellte Antriebsverbindung wird montageeinfach durch Aufstecken der Nabe 12 oder durch Einschieben der Welle 10 hergestellt. Selbst unter Einhaltung enger Toleranzgrenzen ist ein geringfügiges Einbauspiel nicht vermeidbar.

Um insbesondere im drehmomentlosen Antriebsbetrieb einem gegebenenfalls auftretenden Verzahnungsklappern in der Steckverbindung 14 entgegenzuwirken, ist zwischen der Nabe 12 und der Welle 10 ein ringförmiges Federelement 16 zum Beispiel aus Federstahl vorgesehen, das Welle 10 und Nabe 12 gegeneinander verspannt und zudem durch die außermittige Positionierung ein Kippmoment M_{K} ausübt.

In der Fig. 1 ist die Nabe 12 mit ihrer Innenverzahnung 14b auf ein Wellen-Endstück 13 aufgesteckt ist. Das Federelement 16 ist dabei auf einer, von einer Wellen-Stirnseite 15 abgewandten Naben-Stirnseite 17 positioniert ist, das heißt um einen Längenversatz Δb von der Wellen-Stirnseite 15 beabstandet.

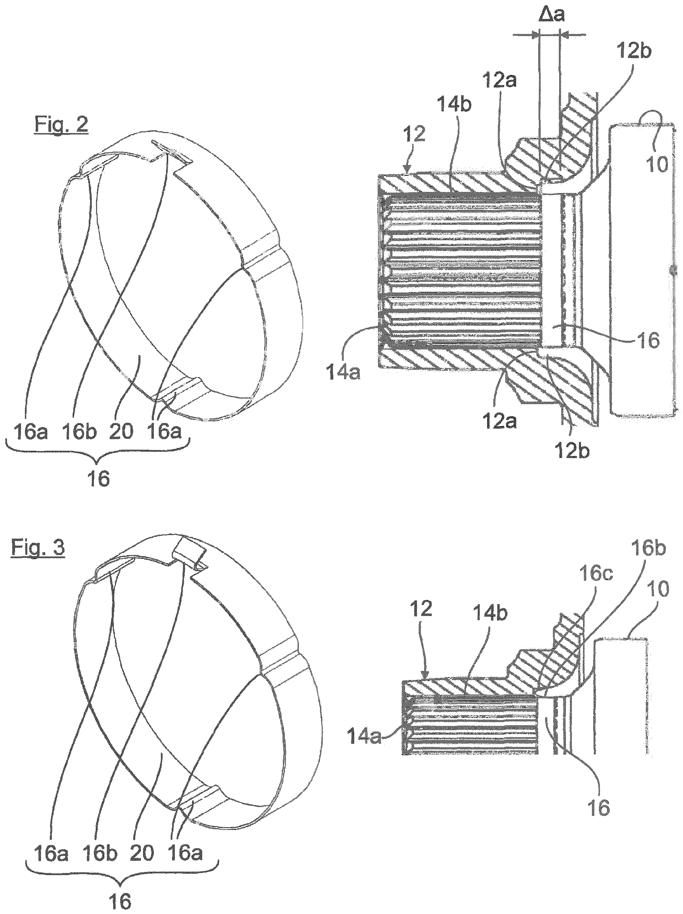

In der Fig. 2 ist rechtsseitig die Welle-Nabe-Verbindung im Längsschnitt und linksseitig das Federelement 16 raumbildlich gezeigt. Demzufolge weist das Federelement 16 einen bandförmigen Federring-Grundkörper 20 sowie drei davon radial nach innen ragende Fixierungen bzw. Einformungen 16a auf, die definiert umfangsverteilt auf die Außenverzahnung 14a derart abgestimmt sind, dass sie jeweils in Zahnlücken der Außenverzahnung 14a spielfrei eingreifen.

Ferner weist das Federelement 16 in der Fig. 1 einen radial nach außen abragenden Vorsprung bzw. eine Federzunge 16b auf, die axial außerhalb der Naben-Innenverzahnung 14b (siehe Längsschnitt der Fig. 1) an einer Ringsschulter 12a anliegt und über den an die Innenverzahnung 14b anschließenden, im Durchmesser erweiterten Abstützbereich 12b der Nabe 12 diese gegen die Welle 10 in radialer Richtung vorspannt. Die Federzunge 16b ist bevorzugt aus dem bandförmigen Federring-Grundkörper 20 herausgestanzt und entsprechend ausgestellt. Alternativ dazu kann das Federelement 16 nicht in einem Stanzprozess fertiggestellt werden, sondern auch zum Beispiel aus einem Draht gebogen werden.

Der Federring-Grundkörper 20 kann durch die Fixierungen 16a auf der Welle 10 bzw. der Außenverzahnung 14a axial gehalten sein. Gegebenenfalls kann aber auch an der Welle 10 ein an die Außenverzahnung 14a anschließender Ringbund (nicht dargestellt) vorgesehen sein, an dem der Federring-Grundkörper 20 anschlägt.

Nachfolgend ist die Bauteilgeometrie der Drehmomentübertragungsanordnung im Detail beschrieben: So ist am Innenumfang der Nabe 12 der oben erwähnte Abstützabschnitt 12b ausgebildet, gegen den das Federelement 16 mit einer Federkraft F (Fig. 1) abgestützt ist, und zwar unter Aufbau des Kippmoments M_{K}, mit dem die Nabe 12 in der Axialrichtung gegenüber die Welle 10 kippbar ist, d.h. aus seiner koaxialen Lage kippbar ist. Der Abstützabschnitt 12b ist außerhalb der Naben-Innenverzahnung 14b positioniert und schließt sich in axialer Verlängerung mit einem Übermaß Δa (Fig. 2) unmittelbar an die Naben-Innenverzahnung 14b an. In dem gezeigten Ausführungsbeispiel ist der Abstützabschnitt 12b eine der Welle 10 zugewandte, glattzylindrische sowie umlaufende Ringfläche. Diese ist, im Vergleich zum Fußkreisdurchmesser der Naben-Innenverzahnung 14b durchmessergrößer. Die Nabe-Innenverzahnung 14b geht an einer Ringschulter 12a mit zur Achsrichtung rechtwinkliger Schulterfläche in die Ringfläche 12b über. Auf diese Weise ist zwischen der Welle 10 und der Ringfläche 12b (das heißt dem nabenseitigen Abstützabschnitt) ein Ringraum 19 (Fig. 1) gebildet, in dem der Federring 16 angeordnet ist. Der Ringraum 19 ist radial nach innen durch die Wellen-Außenverzahnung 14a begrenzt.

Die Montage der Antriebsverbindung erfolgt, indem zunächst das Federelement 16 auf die Außenverzahnung 14a der Welle 10 bei einer definierten Schiebekraft aufgeschoben wird. Sodann wird die Nabe 12 (oder umgekehrt die Welle 10) über die Steckverbindung 14 mit der Welle 10 gekoppelt. Da das Federelement 16 axial außerhalb der Innenverzahnung 14b positioniert ist, kann die Steckverzahnung 14 herkömmlich (das heißt ohne jegliche Ausnehmungen für das Federelement 16) ausgeführt sein.

Die Fig. 3 zeigt eine zur Fig. 2 abgewandelte Ausführung des Federelements 16, bei dem die Federzunge 16b V-förmig abgewinkelt ausgeführt ist und mit einem radial äußeren Schenkel 16c (siehe Längsschnitt der Fig. 3) auf die Nabe 12 wirkt.

Die V-förmige Gestaltung der Federzunge 16b, 16c kann gegebenenfalls vorteilhaft sein zur Überbrückung größerer, radialer Abstände zwischen der Nabe 12 und der Welle 10 und/oder zur Montageerleichterung dienen.

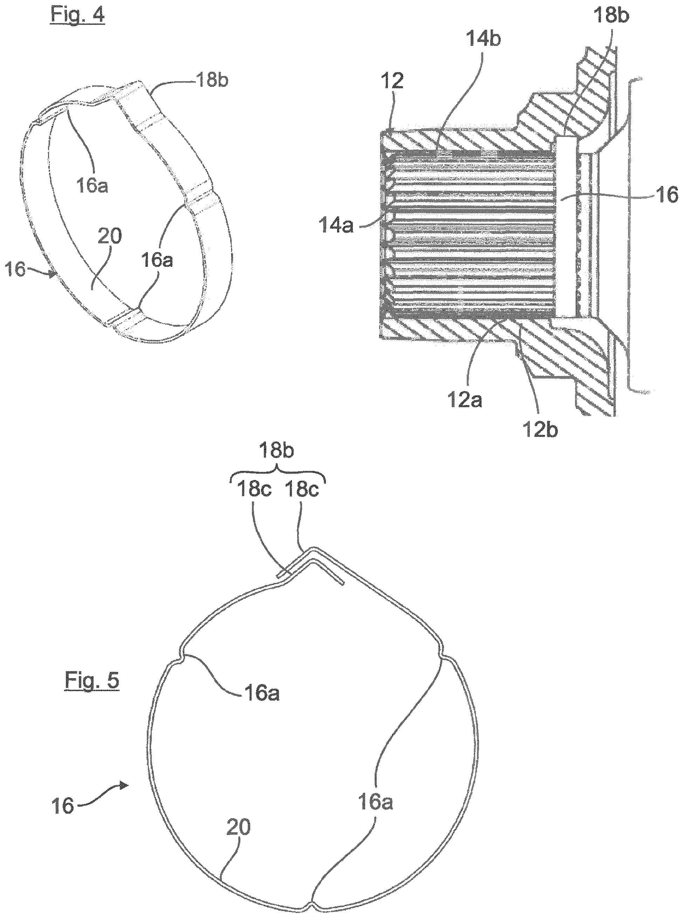

Die Fig. 4 und 5 zeigen zu den Fig. 2 und 3 alternative Ausgestaltungen des Federelements 16 mit einem bandförmigen Federring-Grundkörper 20, dessen radial nach außen ragender Vorsprung durch eine nockenförmige Ausformung 18b (Fig. 4) oder 18c (Fig. 5) hergestellt ist.

Gemäß Fig. 4 ist der Federring-Grundkörper 16 mit Fixierungen 16a, wie vorstehend zu den Fig. 2 und 3 beschrieben, versehen. Die Ausformung 18b ist so ausgebildet (vergleiche Längsschnitt der Fig. 4), dass diese durch federndes Anliegen an der Nabe 12 bzw. dem radial erweiterten Abstützabschnitt 12b die Nabe 12 gegen die Welle 10 verspannt.

Die Fig. 5 zeigt abschnittsweise einen zur Fig. 4 abgewandelten Federring-Grundkörper 16, der offen ausgeführt ist und dessen etwa V-förmig abgewinkelte und sich überlappende Endbereiche 18c die Ausformung 18b bilden. Gegebenenfalls können die Endbereiche 18c stoffschlüssig miteinander verbunden sein.

Mit dieser zur Fig. 4 abgewandelten Version des Federring-Grundkörpers 20 kann gegebenenfalls eine noch höhere Verspannung zwischen der Welle 10 und der Nabe 12 bzw. innerhalb der Steckverzahnung 14 erzeugt werden.

Die Erfindung ist nicht auf die dargestellten Ausführungsbeispiele beschränkt. Gegebenenfalls können auch mehrere, radial abragende Vorsprünge 16b, 18b an den Federelementen 16 vorgesehen sein, die definiert umfangsverteilt positioniert sind und sowohl reibschlüssig (im Rahmen eines gegebenenfalls vorhandenen Verzahnungsspiels) in Umfangsrichtung als auch kraftschlüssig in Radialrichtung wirken.

Die Federelemente 16 können auch eine andere Querschnittsform (zum Beispiel drahtförmig) aufweisen und gegebenenfalls auch ohne Fixierungen 16a mit entsprechendem Presssitz an der Außenverzahnung 14a ausgeführt sein.

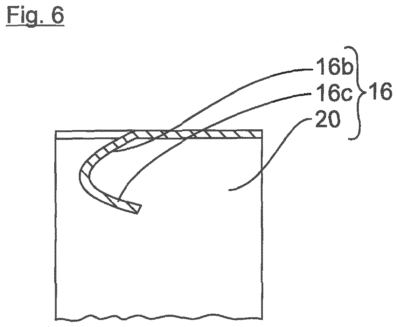

In der Fig. 6 ist ein weiteres Ausführungsbeispiel eines Federelements 16 gezeigt. Im Unterschied zu den vorangegangenen Figuren ragt in der Fig. 6 der federnde Vorsprung 16b nicht radial nach außen, sondern radial nach innen ab. Bei der Montage wird daher der Federring-Grundkörper 20 mit seiner Außenseite auf den Naben-Abstützabschnitt 12b aufgesteckt, so dass sich der Vorsprung 16b auf der Welle 14 abstützt.

## Patentansprüche

1. Drehmomentübertragungsanordnung in einem Fahrzeug-Antriebsstrang, mit einer radial inneren Welle (10) und einer radial äußeren Nabe (12), die über eine spielbehaftete Steckverzahnung (14) miteinander momentenübertragend verbunden sind, bei welcher Steckverzahnung (14) eine Wellen-Außenverzahnung (14a) mit einer Naben-Innenverzahnung (14b) zusammenwirkt, und zur Vermeidung eines Verzahnungsklapperns, das heißt zur Bereitstellung einer Spielfreiheit in der Steckverzahnung (14), ein Federelement (16) vorgesehen ist, mit dem die Welle (10) und die Nabe (12) gegeneinander verspannbar sind, wobei zur Herstellung der Spielfreiheit die Nabe (12) einen Abstützabschnitt (12b) aufweist, gegen den das Federelement (16) mit einer Federkraft (F) abgestützt ist, und zwar unter Aufbau eines Kippmoments (M_{K}), mit dem die Nabe (12) in der Axialrichtung gegenüber der Welle (10) kippbar ist, und wobei das zwischen dem Naben-Stützabschnitt (12b) und der Welle (10) abgestützte Federelement (16) einen Federring-Grundkörper (20) und zumindest einen radial nach innen und/oder nach außen abragenden, federnden Vorsprung (16b; 18b) aufweist, **dadurch gekennzeichnet, dass** der Federring-Grundkörper (20) aus einem bandförmigen Flachprofil-Material gefertigt ist, und dass der Federring-Grundkörper (20) mit seiner Innenseite auf der Wellen-Außenverzahnung (14a) sitzt bzw. aufgesteckt ist, oder dass der Federring-Grundkörper (20) mit seiner Außenseite auf dem Naben-Abstützabschnitt (12b) sitzt bzw. aufgesteckt ist.

2. Anordnung nach Anspruch 1, **dadurch gekennzeichnet, dass** der Naben-Abstützabschnitt (12b) in Axialrichtung außerhalb der Naben-Innenverzahnung (14b) positioniert ist, und dass insbesondere sich der Abstützabschnitt (12b) in axialer Verlängerung mit einem Übermaß (Δa) unmittelbar an die Naben-Innenverzahnung (14b) anschließt.

3. Anordnung nach Anspruch 1 oder 2, **dadurch gekennzeichnet, dass** die Nabe (12) mit ihrer Innenverzahnung (14b) auf ein Wellen-Endstück (13) aufgesteckt ist, und dass das Federelement (16) auf einer, von einer Wellen-Stirnseite (15) abgewandten Naben-Stirnseite (17) positioniert ist, und/oder dass das Federelement (16) um einen Axial-Längenversatz (Δb) von der Wellen-Stirnseite (15) beabstandet ist.

4. Anordnung nach einem der vorhergehenden Ansprüche, **dadurch gekennzeichnet, dass** der Naben-Abstützabschnitt (12b) eine der Welle (10) zugewandte, insbesondere glattzylindrische, umlaufende Ringfläche ist.

5. Anordnung nach Anspruch 4, **dadurch gekennzeichnet, dass** die nabenseitige Ringfläche (12b) im Vergleich zur Naben-Innenverzahnung (14b), insbesondere im Vergleich zu deren Fußkreisdurchmesser, durchmessergrößer ist, und dass die Nabe-Innenverzahnung (14b) an einer Ringschulter (12a) mit im Wesentlichen zur Achsrichtung rechtwinkliger Schulterfläche in die Ringfläche (12b) übergeht.

6. Anordnung nach einem der vorhergehenden Ansprüche, **dadurch gekennzeichnet, dass** zwischen der Welle (10) und dem nabenseitigen Abstützabschnitt (12b) ein Ringraum (19) gebildet ist, in dem das Federelement (16) angeordnet ist, und dass insbesondere der Ringraum (19) radial nach innen durch die Wellen-Außenverzahnung (14a) begrenzt ist.

7. Anordnung nach einem der vorhergehenden Ansprüche, **dadurch gekennzeichnet, dass** der Federring-Grundkörper (20) Endbereiche (18c) aufweist, die einander, vorzugsweise lose, in der Umfangsrichtung überlappen.

8. Anordnung nach einem der vorhergehenden Ansprüche, **dadurch gekennzeichnet, dass** der Vorsprung (16b) eine aus dem Federring-Grundkörper (20) herausgestanzte Federzunge ist, und dass insbesondere die Federzunge (16b) im Querschnitt V-förmig mit einem radial äußeren Federschenkel (16c) ausgeführt ist.

9. Anordnung nach Anspruch 8, **dadurch gekennzeichnet, dass** der Vorsprung (18b) eine nockenförmige Ausformung des Federring-Grundkörpers (20) ist, und dass insbesondere die nockenförmige Ausformung (18b) durch sich überlappende Endbereiche (18c) Federring-Grundkörpers (16) hergestellt ist.

10. Anordnung nach einem der vorhergehenden Ansprüche, **dadurch gekennzeichnet, dass** der insbesondere auf die Wellen-Außenverzahnung (14a) aufgesteckte Federring-Grundkörper (20) zumindest eine in eine Zahnlücke der Außenverzahnung (14a) eingreifende Fixierung (16a) in Umfangsrichtung aufweist.

11. Anordnung nach Anspruch 10, **dadurch gekennzeichnet, dass** die Fixierung (16a) eine radial nach innen ragende Einformung (16a; 18a) im Federring-Grundkörper (16) ist.

12. Anordnung nach einem der Ansprüche 5 bis 11, **dadurch gekennzeichnet, dass** im montierten Zustand der Verbindung der Federring (16) in axialer Richtung zwischen der nabenseitigen Ringschulter (12a) und einem an die Außenverzahnung (14a) der Welle (10) angrenzenden Ringbund der Welle (10) positioniert ist, der im Vergleich zum Federring (16) durchmessergrößer ausgelegt ist.

## Claims

1. Torque transmission arrangement in a vehicle drive train, having a radially inner shaft (10) and a radially outer hub (12), which are connected to one another in a torque-transmitting manner via a spline system (14) with play, in the case of which spline system (14) an external shaft spline system (14a) interacts with an internal hub spline system (14b), and a spring element (16) is provided in order to avoid spline rattling, that is to say in order to provide a lack of play in the spline system (14), by way of which the shaft (10) and the hub (12) can be braced against one another, wherein the hub (12) has a supporting section (12b) in order to establish the lack of play, against which supporting section the spring element (16) is supported with a spring force (F), specifically while building up a tilting moment (M_{K}), by way of which the hub (12) can be tilted in the axial direction with respect to the shaft (10), and wherein the spring element (16) supported between the supporting section (12b) and the shaft (10) has a spring ring-base body (20) and at least one resilient protuberance (16a; 16b) projecting radially inwards and/or outwards, **characterised in that** the spring ring-base body (20) is made of a band-shaped flat profile material, and that the spring ring-base body (20) rests or is mounted with its inner side on the external shaft spline system (14a), or that the spring ring-base body (20) rests or is mounted with its outer side on the hub-supporting section (12b).

2. Arrangement according claim 1, **characterised in that** the hub-supporting section (12b) is positioned in the axial direction outside of the internal hub spline system (14b), and that in particular the supporting section (12b) connects directly to the internal hub spline system (14b) in an axial extension with an excess (Δa).

3. Arrangement according to claim 1 or 2, **characterised in that** the hub (12) with its internal spline system (14b) is mounted on a shaft end piece (13), and that the spring element (16) is positioned on a hub end face (17) facing away from a shaft end face (15), and/or that the spring element (16) is spaced apart from the shaft end face (15) by an axial length offset (Δb).

4. Arrangement according to any one of the preceding claims **characterised in that** the hub-supporting section (12b) is an in particular smooth cylindrical, circumferential annular surface facing the shaft (10).

5. Arrangement according to claim 4, **characterised in that** the hub-side annular surface (12b) is of larger diameter in particular in comparison to its root circle diameter, and that the internal hub spline system (14b) merges on an annular shoulder (12a) with shoulder surface substantially perpendicular to the axial direction into the annular surface (12b).

6. Arrangement according to any one of the preceding claims **characterised in that** between the shaft (10) and the hub-side supporting section (12b) an annular space (19) is formed, in which the spring element (16) is arranged, and that in particular the annular space (19) is delimited radially inwards by the external shaft spline system (14a).

7. Arrangement according to any one of the preceding claims, **characterised in that** the spring ring-base body (20) has end regions (18c), which overlap one another, preferably loosely, in the circumferential direction.

8. Arrangement according to any one of the preceding claims, **characterised in that** the protuberance (16b) is a spring tongue stamped from a spring ring-base body (20), and that in particular the spring tongue (16b) is designed in cross section V-shaped with a radially outer spring limb (16c).

9. Arrangement according to claim 8, **characterised in that** the protuberance (18b) is a cam-shaped formation of the spring ring-base body (20), and that in particular the cam-shaped formation (18b) is produced by overlapping end regions (18c) of the spring ring-base body (16).

10. Arrangement according to any one of the preceding claims, **characterised in that** the spring ring-base body (20) mounted in particular on the external shaft spline system (14a) has at least one fixation (16a) engaging in a tooth gap of the external spline system (14a) in the circumferential direction.

11. Arrangement according to claim 10, **characterised in that** the fixation (16a) is a recess (16a; 18a) protruding radially inwards in the spring ring-base body (16).

12. Arrangement according to any one of claims 5 to 11, **characterised in that** in the mounted state of the connection the spring ring (16) is positioned in the axial direction between the hub-side ring shoulder (12a) and an annular collar of the shaft (10) adjacent to the external spline system (14a) of the shaft (10), which annular collar is designed of larger diameter in comparison to the spring ring (16).

## Revendications

1. Agencement de transmission de couple dans une chaîne cinématique de véhicule, avec un arbre (10) radialement intérieur et un moyeu (12) radialement extérieur, qui sont raccordés par transmission de couple l'un à l'autre par le biais d'une denture enfichable (14) avec jeu, pour laquelle denture enfichable (14) une denture extérieure (14a) d'arbre coagit avec une denture intérieure (14b) de moyeu, et pour l'empêchement d'un claquement de denture, c'est-à-dire pour la mise à disposition d'une liberté de jeu dans la denture enfichable (14), un élément de ressort (16) est prévu, avec lequel l'arbre (10) et le moyeu (12) peuvent être serrés l'un contre l'autre, dans lequel pour l'établissement de la liberté de jeu le moyeu (12) présente une section d'appui (12b), contre laquelle l'élément de ressort (16) est en appui avec une force de ressort (F), et ce en établissant un couple de basculement (M_{K}), avec lequel le moyeu (12) peut être basculé dans le sens axial par rapport à l'arbre (10), et dans lequel l'élément de ressort (16) en appui entre la section d'appui (12b) de moyeu et l'arbre (10) présente un corps de base d'anneau de ressort (20) et au moins une saillie (16b ; 18b) élastique, dépassant radialement vers l'intérieur et/ou vers l'extérieur, **caractérisé en ce que** le corps de base d'anneau de ressort (20) est fabriqué en un matériau de profil plat en forme de bande, et que le corps de base d'anneau de ressort (20) loge ou est enfiché avec son côté intérieur sur la denture extérieure (14a) d'arbre, ou que le corps de base d'anneau de ressort (20) loge ou est enfiché avec son côté extérieur sur la section d'appui (12b) de moyeu.

2. Agencement selon la revendication 1, **caractérisé en ce que** la section d'appui (12b) de moyeu est positionnée dans le sens axial en dehors de la denture intérieure (14b) de moyeu, et qu'en particulier la section d'appui (12b) se raccorde en prolongement axial avec une surmesure (Δa) directement à la denture intérieure (14b) de moyeu.

3. Agencement selon la revendication 1 ou 2, **caractérisé en ce que** le moyeu (12) est enfiché avec sa denture intérieure (14b) sur une pièce d'extrémité d'arbre (13), et que l'élément de ressort (16) est positionné sur un côté avant de moyeu (17) éloigné d'un côté avant d'arbre (15), et/ou que l'élément de ressort (16) est espacé d'un déport longitudinal axial (Δb) du côté avant d'arbre (15).

4. Agencement selon l'une quelconque des revendications précédentes, **caractérisé en ce que** la section d'appui (12b) de moyeu est une surface annulaire tournante, en particulier cylindrique et lisse, tournée vers l'arbre (10).

5. Agencement selon la revendication 4, **caractérisé en ce que** la surface annulaire (12b) côté moyeu est de plus grand diamètre par rapport à la denture intérieure (14b) de moyeu, en particulier par rapport au diamètre de cercle de pied, et que la denture intérieure (14b) de moyeu passe au niveau d'un épaulement annulaire (12a) avec une surface d'épaulement sensiblement rectangulaire par rapport au sens axial en la surface annulaire (12b).

6. Agencement selon l'une quelconque des revendications précédentes, **caractérisé en ce qu'**un espace annulaire (19) est formé entre l'arbre (10) et la section d'appui (12b) côté moyeu, dans lequel l'élément de ressort (16) est agencé, et qu'en particulier l'espace annulaire (19) est délimité radialement vers l'intérieur par la denture extérieure (14a) d'arbre.

7. Agencement selon l'une quelconque des revendications précédentes, **caractérisé en ce que** le corps de base d'anneau de ressort (20) présente des zones d'extrémité (18c) qui se recouvrent les unes les autres, de préférence de manière lâche, dans le sens périphérique.

8. Agencement selon l'une quelconque des revendications précédentes, **caractérisé en ce que** la saillie (16b) est une languette de ressort estampée à partir du corps de base d'anneau de ressort (20), et qu'en particulier la languette de ressort (16b) est réalisée en forme de V en section transversale avec une branche de ressort (16c) radialement extérieure.

9. Agencement selon la revendication 8, **caractérisé en ce que** la saillie (18b) est un démoulage en forme de came du corps de base d'anneau de ressort (20), et qu'en particulier le démoulage (18b) en forme de came est établi par des zones d'extrémité (18c) se chevauchant du corps de base d'anneau de ressort (16).

10. Agencement selon l'une quelconque des revendications précédentes, **caractérisé en ce que** le corps de base d'anneau de ressort (20) enfiché en particulier sur la denture extérieure (14a) d'arbre présente au moins une fixation (16a) venant en prise dans un interstice de dent de la denture extérieure (14a) dans le sens périphérique.

11. Agencement selon la revendication 10, **caractérisé en ce que** la fixation (16a) est un moulage (16a ; 18a) dépassant radialement vers l'intérieur dans le corps de base d'anneau de ressort (16).

12. Agencement selon l'une quelconque des revendications 5 à 11, **caractérisé en ce que** dans l'état monté du raccordement l'anneau de ressort (16) est positionné dans le sens axial entre l'épaulement annulaire (12a) côté moyeu et un collet annulaire de l'arbre (10) contigu à la denture extérieure (14a) de l'arbre (10), lequel est conçu avec un plus grand diamètre par rapport à l'anneau de ressort (16).
